# EUROPÄISCHE PATENTSCHRIFT

(11) **EP 2 112 087 B1**
(45) Veröffentlichungstag und Bekanntmachung des Hinweises auf die Patenterteilung: **07.08.2013**
(21) Anmeldenummer: 09152760.6
(22) Anmeldetag: 13.02.2009
(51) Int. Cl.: B65D 71/00, B65D 75/00

(54) **Zwischenlage in Kombination mit einer Großgebinde-Palette**
Intermediate layer in combination with a pallet comprising large packs
Intercalaire en combinaison avec une palette comprenant des gros packs

(30) Priorität: 22.04.2008 DE 102008020300
(43) Veröffentlichungstag der Anmeldung: 28.10.2009
(73) Patentinhaber: Krones AG, 93073 Neutraubling (DE)
(72) Erfinder: Zeiner, Peter, 83064, Raubling (DE); Perl, Kurt, 83253, Rimsting (DE)
(74) Vertreter: Benninger, Johannes

(56) Entgegenhaltungen:
- EP-A- 1 184 164
- EP-A- 1 386 863
- DE-A1- 2 019 948
- FR-A1- 2 589 831
- JP-A- 8 058 756
- US-A- 5 747 131
- US-A1- 2002 006 756

## Beschreibung

Die vorliegende Erfindung betrifft eine Zwischenlage in Kombination mit einer Großgebinde-Palette, mit den Merkmalen des Oberbegriffs des Anspruchs 1.

### Stand der Technik

Bei der Palettierung von Gebinden aus Flüssigkeitsbehältern, insbesondere bei Gebinden, die mittels einer Schrumpffolie zusammengefasst sind, werden zwischen den übereinander angeordneten Gebindelagen Zwischenlagen eingebracht, die der Stabilisierung des Großgebindes dienen.

Häufig werden dabei Lagen aus Karton oder Pappe verwendet. Weiterhin ist die Verwendung von Formteilen bekannt, die formschlüssig mit dem Flaschenboden bzw. Kopf zusammenwirken.

DE 8504047 U1 beschreibt eine Stapelzwischenlage aus Kunststoff, wobei dieses als ein im Tiefziehverfahren hergestelltes plattenförmiges Formteil ausgebildet ist, welches beidseitig mit Vertiefungen versehen ist. Dadurch wird die Standsicherheit der Behälter verbessert, da die Vertiefungen die zu transportierenden Behälter formschlüssig umgreifen.

DE 3627577 A1 betrifft eine Palettenfüllstation für mehrlagige, zum Kippen neigende Produkte, die zur Kippsicherung zwischen einzelnen Produktlagen Zwischenlagen, z. B. aus Papier, aufweisen. Die Station besteht aus einer über einem Palettenförderer angeordneten Hubvorrichtung für die zu befüllende Palette, sowie einer darüber angeordneten Produktlagenzuführung in Form eines quer zur Palettenförderrichtung beweglichen Schiebebodens mit Abstreifern für die zugeführte Lage. Dabei ist unterhalb des Schiebebodens ein Papiermitnehmer angeordnet. Seitlich neben der Palettenhubvorrichtung und unterhalb der Ebene des Schiebebodens befindet sich ein Papiermagazin, das zum Papiermitnehmer hin beweglich ausgebildet ist.

US 4416373 beschreibt als Stand der Technik, dass Flaschen auf einem gewellten Papiertablett angeordnet und mit Schrumpffolie umhüllt werden. Als weitere Methode wird die Verwendung von festsitzenden Steigen beschrieben.

WO 03053826 A1 betrifft ein Verfahren und eine Vorrichtung zum Palettieren von mehrlagigen Palettiergütern, insbesondere Flaschen, mit einer maschinellen Palettiereinrichtung, die drei getrennte Palettiergeräte aufweist. Von diesen Palettiergeräten wird die Palette an mindestens zwei örtlich getrennten Palettierplätzen aus einem Bodenteil, mehreren Lagen Palletiergut, mehreren Zwischenlagen und einem Deckel aufgebaut, wobei die Vorbereitung, der Lagenaufbau und die Fertigstellung der Palette an unterschiedlichen Stellen stattfinden. Als Zwischenlage können hierbei Karton, Kunststoff oder dergleichen anderen geeigneten Materialien verwendet werden.

WO 1994007758 A1 bezieht sich auf die Verpackung von Flaschen, wobei sich die Flaschen in einer Mehrzahl von übereinander gestapelten Schichten befinden, in denen die Flaschen aufrecht stehen. Dabei werden Basisplatten zwischen die Flaschenschichten gelegt. Diese Basisplatten enthalten für den sicheren Transport so genannte Sitze, deren innere Oberfläche dem Flaschenhals nachgeformt ist. Die andere Oberfläche weist tassenähnliche Sitze auf, die dem Flaschenboden nachgeformt sind.

EP 1073598 B1 bezieht sich auf den Transport leerer Flaschen mithilfe eines erfindungsgemäßen Zwischenträgers. Dieser weist vorzugsweise eine Flaschenführung auf. Dadurch haben die Flaschen eine gesicherte Lage und lassen sich auch zum Entpalettieren und zum erneuten Vereinzeln an einer Füllanlage oder dergl. positionsgenau entnehmen.

WO 002004031058 A1 beschreibt, dass beim Stapeln stapelbarer Gegenstände in Schichten auf Paletten häufig Zwischenlagen aus Papier, Pappe oder Folie verwendet werden. Um das Herunterfallen der Gegenstände beim Transport durch Rutschen zu verhindern sind spezielle Zwischenlagen mit einer nicht rutschigen Oberfläche bekannt. Die in WO 002004031058 A1 beschriebene Erfindung bezieht sich auf die Ausgabe solcher Zwischenlagen, die während der Ausgabe mit einer nichtrutschenden Überfläche beschichtet werden.

DE 20120699 U1 beschreibt als bekannten Stand der Technik, dass aus der Praxis Palettiergeräte bekannt sind, die mit Greifeinrichtungen ausgestattet sind, mit denen diese das Palettiergut, Zwischenlagen in Form von Kartonböden oder Folien und einen Deckel oder Stabilisierungsrahmen handhaben und nacheinander auf einem meist anderweitig bereitgestellten Bodenteil zur fertigen Palette aufstapeln.

DE 8811005 U1 beschreibt das Palettieren von mittels einer Schrumpffolie verpackten Gegenständen beispielsweise Flaschen, Gläser, Büchsen oder dergleichen in übereinander gestapelten Lagen, wobei gemäß dem Stand der Technik zwischen den einzelnen Lagen vielfach eine Zwischenlage aus Karton oder Kunststoff eingelegt wird. Die in diesem Dokument beschriebene neue Zwischenlage besteht aus einem Träger aus einem biegesteifen Werkstoff und einer an diesem angebrachten Kunststofffolie, die seitlich über den Träger übersteht und deren überstehende Randstreifen mit der Verpackungsfolie der Verpackungseinheit verschrumpfbar sind.

DE 7015605 U1 und DE 2019948 A1 zeigen die Anordnung von speziellen platzsparenden Gebinden, bei denen beispielsweise sieben Flaschen zu einem Gebinde zusammengefasst sind, auf einer Europa- Palette. Zwischen die einzelnen Lagen kann eine Pappzwischenlage oder eine Kunststofffolie gelegt werden. Am Ende werden alle Zwischenlagen beispielsweise durch eine alle Lagen gemeinsame Schrumpffolie auf der Palette gesichert. Die Pappzwischenlage oder Kunststofffolie hindert die Packungen am Verrutschen und ermöglicht ein einfaches Herausnehmen der Packungen aus dem Stapel.

DE 4416418 A1 beschreibt einen Warenträger mit einer ebenen, in der Größe einer Normpalette entsprechenden Bodenfläche, mit umlaufenden, im wesentlichen vertikal gerichteten Seitenflächen. Erfindungsgemäß sind die Seitenflächen zweier übereinandergestapelter Warenträger teleskopartig ineinandergreifend ausgebildet.

JP 2006069655 A beschreibt eine integrierte Transportstruktur für Leichtgewicht- Container. Hierbei wird eine Zwischenlage aus Kunststoff mit klebriger Oberfläche verwendet.

US 4941374 beschreibt eine Vorrichtung zum Beladen von Paletten mit Kartons, die in Lagen angeordnet werden, wobei Zwischenlagen aus Papier verwendet werden. Die Zwischenschicht wird mittels eines drehbaren Trägerarms, der einen Saughalter aufweist, auf die Kartonschicht aufgelegt. Das Papier wird auf einer Rolle bereitgestellt und in der entsprechend benötigten Größe abgetrennt.

CA 2500638 zeigt einen Palettierer mit einer Bereitstellung von Zwischenlagen von einer Rolle, wobei Zwischenlagen aus Folie nacheinander abgegeben und bei dem Abgabevorgang mit einer nichtrutschenden Beschichtung versehen werden.

DE 3627577 Al beschreibt eine Palettenfüllstation, wobei zwischen den Produktlagen Zwischenlagen aus Papier zur Kippsicherung eingelegt werden. Das Stückgut wird mittels einer Hubvorrichtung und einer Produktlagenzuführung mit beweglichem Schiebeboden auf der Palette angeordnet. Unterhalb des Schiebebodens ist ein Papiermitnehmer angeordnet, der die Papierzwischenlagen aus einem Papiermagazin entnimmt.

EP 1386863 A offenbart eine Zwischenlage in Kombination mit einer Großgebinde-Palette gemäβ dem Oberbegriff des Anspruchs 1.

### Beschreibung

Das Ziel der Erfindung besteht darin, eine die Stabilität erhöhende und kostengünstige Zwischenlage für die Palettierung von Gebinden aus Flüssigkeitsbehältern, die mit einer Schrumpffolie umhüllt sind, bereitzustellen. Dieses Ziel der Erfindung wird mit dem Gegenstand des unabhängigen Anspruchs 1 erreicht. Merkmale vorteilhafter Weiterbildungen der Erfindung ergeben sich aus den abhängigen Ansprüchen.

Eine Großgebinde- Palette umfasst wenigstens zwei übereinander angeordneten Gebindelagen, die auf einer Palette, beispielsweise einer Euro- Palette, eine Holz- oder Kunststoffpalette angeordnet sind. Zwischen den Gebindelagen befindet sich wenigstens eine angeordnete Zwischenlage. Ein auf einer Palette anzuordnendes Gebinde besteht aus wenigstens zwei Flüssigkeitsbehältern, die mittels einer Schrumpffolie zusammengefasst bzw. verpackt sind.

Die Flüssigkeitsbehälter können beispielsweise Dosen, Flaschen aus Glas oder Kunststoff, Tetrapacks o.ä. sein. Vorzugsweise handelt es sich bei den verpackten Flüssigkeitsbehältern um PET- Flaschen.

Gemäß vorliegender Erfindung wird als Zwischenlage eine PE-Folie verwendet. Hierbei kann es sich um jede dem Fachmann bekannte PE- Folie handeln. Beispielsweise kann bei der Erstellung der Folienrezeptur zusätzlich Recycling-Material verwendet werden. Durch die Verwendung von Recyclingmaterial wird die Folienherstellung aus wirtschaftlicher Sicht lukrativer. Die verwendete Folie besteht aber üblicherweise nicht nur aus reinem Recyclingmaterial.

Als Zwischenlage wird eine deformierbare Folie verwendet, die sich an die Form der Gebinde anpasst, da die Folie an Stellen hoher Belastung durch Druck oder Zug leicht nachgibt und sich entsprechend ausdehnt. Die Oberseiten der Flüssigkeitsbehälter des unteren Gebindes greifen in die Unterseiten der Flüssigkeitsbehälter des darüber angeordneten Gebindes, wodurch eine Art Verzahnung der Flaschenköpfe mit den Flaschenböden entsteht, die zu einer weiteren Stabilisierung der Großgebinde- Palette führt.

Die als Zwischenlage verwendete Folie weist eine Dichte zwischen 0,917 bis 0,975 g/cm³ und eine Dicke zwischen 50 bis 200 µm, insbesondere zwischen zwischen 80 bis 150 µm auf. Die verwendete Folie kann also sehr dünn sein. Da der Preis einer Zwischenlage immer auch von der Materialmenge abhängig ist, ist eine dünnere Zwischenlage kostengünstiger als eine dickere. Dies wirkt sich unmittelbar auf die Herstellungspreise in der Verpackungsindustrie aus und bringt bereits bei der Herstellung einer Palette einen unmittelbaren Vorteil, der sich bei der Verpackung vieler Paletten natürlich wesentlich deutlicher zeigt.

Die als Zwischenlage verwendete Folie kann weiterhin einen Reibungskoeffizienten zwischen 0,25 und 0,6 aufweisen. Die Schrumpffolie, die zur Verpackung der Gebinde verwendet wird, weist dagegen vorzugsweise einen Reibungskoeffizienten zwischen 0,2 und 0,35 auf. Die Zwischenlage weist einen höheren Reibungskoeffizienten als die die Gebinde verpackende Schrumpffolie auf. Dadurch entsteht zwischen den Gebinden und der FolienZwischenlage ein größerer Reibwiderstand, wodurch ein Verrutschen / Verdrehen der Gebinde verhindert wird.

Die Zwischenlage kann beispielsweise für Werbe- und / oder Informationszwecke o.ä. bedruckt sein. Im Allgemeinen wird jedoch eine unbedruckte Folie als Zwischenlage verwendet.

Die Zwischenlage kann weiterhin verstärkt sein. Insbesondere können durch die Zugabe von Additiven gezielt gewünschte Nebeneffekte wie z.B. Steifigkeit und oder Reibungskoeffizienten erhöht und / oder minimiert werden. Diese können unabhängig voneinander verändert werden. Als Beispiel zur Veränderung der Steifigkeit könnte Kreide als Additiv eingesetzt werden.

Weiterhin kann die Zwischenlage punktuell verstärkt werden. Gemäß einer bevorzugten Ausführungsform kann die Zwischenlage punktuell durch gezieltes Schrumpfen verstärkt werden. Und zwar kann bei der Verwendung von Schrumpffolien die Folie vor der Verwendung als Zwischenlage an gewissen Stellen zur Versteifung vorgeschrumpft werden. Beispielsweise könnte durch das Aufpressen eines heißen Stahlgitters eine Gitterähnliche geschrumpfte Oberflächenstruktur geschaffen werden, welche dann als zusätzliche Versteifung der Folie dient. Ebenso wäre es denkbar, für einen Folienzuschnitt zwei diagonale Schrumpflinien aufzubringen, die ebenso zur Steifigkeit der Folie beitragen. Diese mechanische Deformation der Folie kann in beliebigen Varianten erfolgen. Ebenso könnte man sich vorstellen, dass die Folie komplett "genadelt" ist. Weitere dem Fachmann bekannte Möglichkeiten zur lokal begrenzten Versteifung von Kunststofffolien sollen ebenfalls umfasst werden.

Die Zwischenlage ist leicht deformierbar. D.h. die Folie gibt an Stellen hoher Belastung durch Druck oder Zug leicht nach und dehnt sich entsprechend aus. Dies führt zu einer mechanischen Anpassung an die Form der Gebinde und ermöglicht, dass die Flaschenverschlussdeckel in den Sternboden der Flaschen der darüberliegenden Gebindelage eintauchen können. Der dabei entstehende Formschluss führt zu einer weiteren Stabilisierung der Großgebindepalette, da dadurch ein seitliches Verrutschen verhindert wird.

Die Folienzwischenlage kann als Folienzuschnitt aus einem Vorrat bereitgestellt werden. Weiterhin kann die Zwischenlage auf Rolle bereitgestellt werden und im Rahmen des Palettierungsvorganges in entsprechender Größe vereinzelt werden.

Gemäß einer weiteren Ausführungsform wird die fertig gestellte Palette bestehend aus Unterpalette (optional), wenigstens zwei Gebindelagen und wenigstens einer Zwischenlage mit einer weiteren Schrumpffolie umwickelt. Diese allumfassende Schrumpffolie dient insbesondere als Transportsicherung. Beim Schrumpfen dieser Umverpackung kann es zu einer zusätzlichen Verbindung zwischen den Gebindeschrumpfverpackungen, der wenigstens einen Zwischenlage und / oder der äußeren Schrumpfverpackung kommen, was der Großgebindepalette weitere Stabilität verleiht. Beispielsweise kann als äußere Schrumpfverpackung eine so genannte Schrumpfhaube verwendet werden.

Dieser Effekt ist allerdings von den bestimmten Materialeigenschaften der verwendeten Zwischenlage abhängig. Bei einer weiteren bevorzugten Alternative weist die verwendete Zwischenlage nur geringe bzw. keine Schrumpfeigenschaften auf. Normalerweise schrumpft bei entsprechender Wärmeeinwirkung jeder Kunststoff. Ein weiterer Kostenvorteil jedoch ist, dass es bei der Verwendung dieser Folie nicht auf das Schrumpfen ankommt. Somit muss bei der Extrusion dieser Folie nicht so sehr auf das Aufblas-Verhältnis geachtet werden wie bei der zum Erstellen von Schrumpfgebinden verwendeten Folie (Bsp. 6pack). Das heißt die Auswahl der Extrusionsanlage ist hier wesentlich variabler als bei einer Schrumpffolie zur Gebindeerstellung.

Gemäß einer weiteren bevorzugten Ausführungsform bestehen die die Gebinde umfassende Schrumpffolie, die Zwischenlage und die zur Transportsicherung der Palette dienende Schrumpffolie aus demselben Material. Dies ist insbesondere für das Recycling bzw. die Wiederverwertung des Verpackungsmaterials von großer Bedeutung, da die verschiedenen Materialien nicht gesondert, sondern gemeinsam entsorgt werden können.

### Figurenbeschreibung

Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügten Zeichnungen Bezug nimmt. Gleiche Bauteile weisen dabei grundsätzlich gleiche Bezugszeichen auf und werden teilweise nicht mehrfach erläutert.
- Fig. 1: (Stand der Technik) zeigt ein mit Schrumpffolie umhülltes Gebinde;
- Fig. 2: zeigt ein Großgebinde, bei dem zwei Gebindelagen auf einer Palette angeordnet sind;
- Fig. 3: zeigt die Anordnung zweier übereinander stehender Gebinde mit Zwischenlage und
- Fig. 4: zeigt eine Zwischenlage mit lokalen Versteifungen.

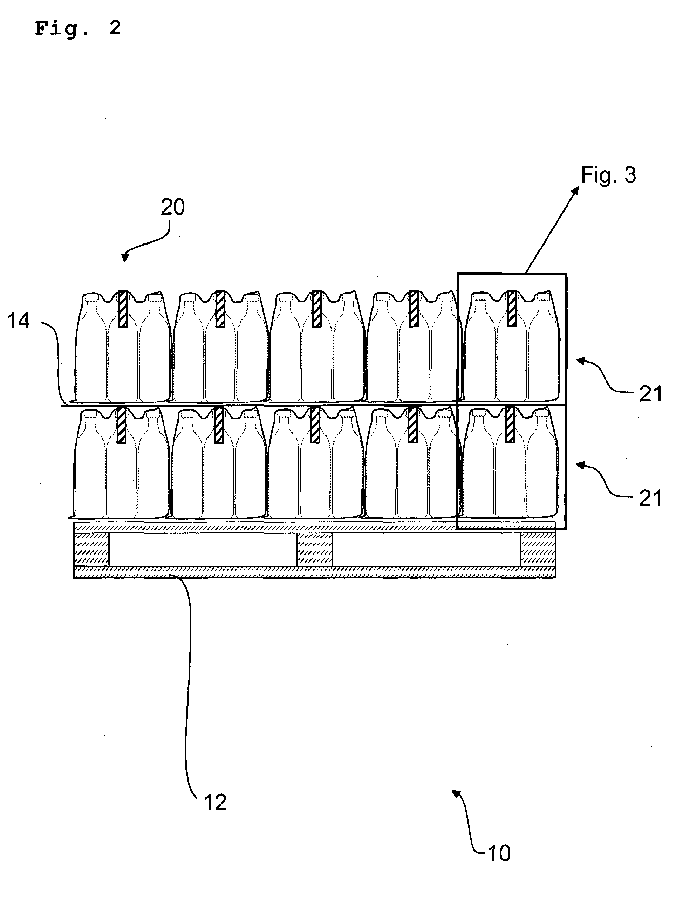

Eine Großgebindepalette 10 mit erfindungsgemäßer Zwischenlage 14 wird anhand von Figur 2 illustriert.

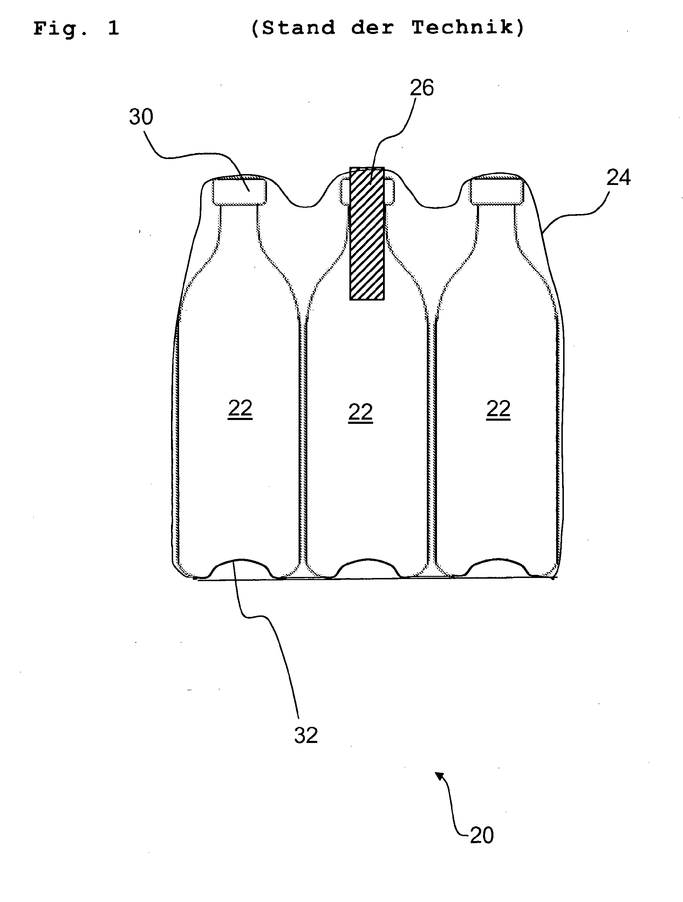

Figur 1 zeigt den Stand der Technik eines mit Schrumpffolie verpackten Gebindes 20. Eine definierte Anzahl von Flüssigkeitsbehältern 22 wird zusammen gruppiert, mit einer Schrumpffolie 24 umhüllt und durch Schrumpfen derselben, beispielsweise in einem Schrumpftunnel, zusammen verpackt. Bei den in Figur 1 dargestellten Flüssigkeitsbehältern 22 handelt es sich um Flaschen. Es können aber auch Dosen, Tetrapacks oder andere Flüssigkeitsbehälter 22 mittels Schrumpffolie zu Gebinden 20 zusammengefasst werden. Das Gebinde 20 kann weiterhin zur Erleichterung des Transports einen Tragegriff 26 aufweisen. Weiterhin ist in Figur 1 die unterschiedliche Oberseite 30 und Unterseite 32 der Flüssigkeitsbehälter sigkeitsbehälter 22 dargestellt. Bei den Flüssigkeitsbehältern 22 handelt es sich vorzugsweise um Flaschen, die beispielsweise an ihrer Unterseite 32 einen sternförmig gewölbten Boden aufweisen.

Figur 2 zeigt eine Großgebinde- Palette 10 mit zwei übereinander angeordneten Gebindelagen 21 auf einer Palette 12. Eine Gebindelage 21 besteht hierbei aus mehreren in definierter Orientierung angeordneten Gebinden 20. Zwischen den Gebindelagen 21 ist eine erfindungsgemäße Zwischenlage 14 angeordnet. Die erfindungsgemäße Zwischenlage 14 besteht aus einer dünnen PE- Folie, wobei beispielsweise HDPE; LDPE, LLDPE als Material in Frage kommt. Die Palette 12, auf der die Gebindelagen 21 angeordnet werden, dient als stabile Unterkonstruktion, die zudem den Transport erleichtert, da die Palette 12 beispielsweise gut mit einem Gabelstabler o.ä. erfasst und transportiert werden kann.

Die Zwischenlage 14 kann sehr dünn sein, beispielsweise weist die als Zwischenlage 14 verwendete Folie eine Dicke zwischen 50 bis 200 µm, insbesondere zwischen 80 bis 150 µm auf. Die dünnen Folien sind sehr kostengünstig zu produzieren bzw. einzukaufen.

Die als Zwischenlage 14 verwendete Folie weist weiterhin eine Dichte zwischen 0,917 bis 0,975 g/cm³ und einen Reibungskoeffizienten zwischen 0,25 und 0,6 auf. Die Schrumpffolie 24, die zur Verpackung der Gebinde 20 verwendet wird, weist dagegen vorzugsweise einen Reibungskoeffizienten zwischen 0,2 und 0,35 auf. Wird eine Zwischenlage 14 mit einem höheren einen Reibungskoeffizienten als der der Gebinde-Schrumpffolie 24 verwendet, entsteht zwischen der Schrumpf-Umverpackung 24 der Gebinde 20 und der Folien- Zwischenlage 14 ein größerer Reibwiderstand, wodurch ein Verrutschen bzw. Verdrehen der Gebinde 20 innerhalb der Gebindelage 21 verhindert wird.

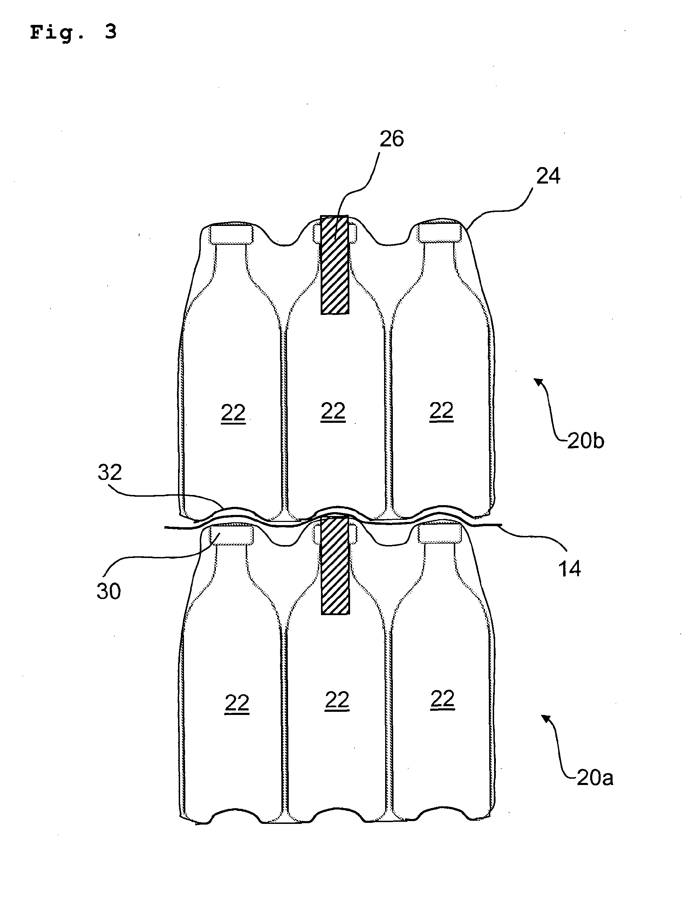

Figur 3 zeigt die Verwendung einer deformierbaren Folie als Zwischenlage 14. Hierbei ist deutlich zu erkennen, dass sich die Zwischenlage 14 an die Form der Gebinde 20 anpasst, da die Folie an Stellen hoher Belastung durch Druck oder Zug leicht nachgibt und sich entsprechend ausdehnt. In Figur 3 ist deutlich zu erkennen, dass die Oberseiten 30 der Flüssigkeitsbehälter 22 des unteren Gebindes 20a in die Unterseiten 32 der Flüssigkeitsbehälter 22 des darüber angeordneten Gebindes 20b greifen, wodurch eine Art Verzahnung der Flaschenköpfe 30 mit den Flaschenböden 32 entsteht, die zu einer weiteren Stabilisierung der Großgebinde- Palette 10 führt.

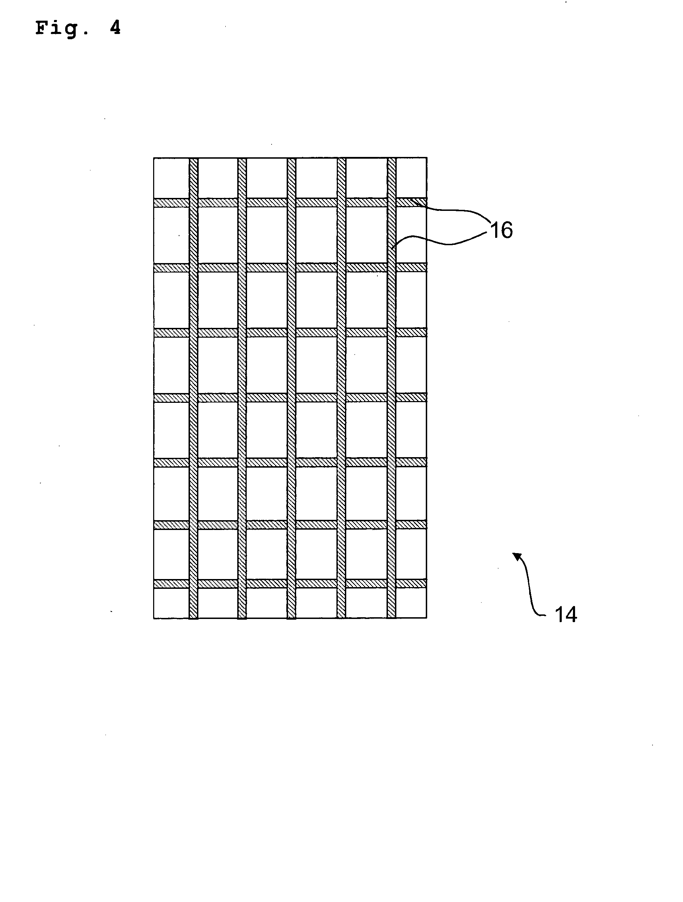

Figur 4 zeigt eine Zwischenlage 14 mit lokalen Versteifungen 16. Hierbei handelt es sich um Versteifungen 16, die beispielsweise durch gezieltes Schrumpfen auf die Folie aufgebracht werden. Dies kann beispielsweise durch das Aufpressen eines heißen Stahlgitters auf die Folie geschehen. Die Folie schrumpft an den heiß gewordenen Stellen, wodurch die zusätzlichen Versteifungen 16 entstehen.

## Patentansprüche

1. Zwischenlage (14) in Kombination mit einer Großgebinde-Palette (10), die wenigstens zwei übereinander angeordnete Gebindelagen (21) umfasst, wobei obere Gebinde (20b) in einer oberen Gebindelage (21) über unteren Gebinden (20a) in einer unteren Gebindelage (21) angeordnet sind, und wobei zwischen den wenigstens zwei übereinander angeordneten Gebindelagen (21) wenigstens eine Zwischenlage (14) angeordnet ist dadurch gekerinzeichnet, dass ein Gebinde (20) wenigstens zwei Flüssigkeitsbehälter (22) mit jeweils einer Oberseite (30) und einer Unterseite (32) umfasst, wobei die Gebinde (20) mittels einer Schrumpffolie (24) zusammengefasst sind und die Zwischenlage (14) eine PE-Folie ist, die derart anpassbar und/oder deformierbar ist, dass die Oberseiten (30) der Flüssigkeitsbehälter (22) der unteren Gebinde (20a) in die Unterseiten (32) der Flüssigkeitsbehälter (22) der darüber angeordneten Gebinde (20b) greifen und dass in Verbindung mit der Zwischenlage (14) eine Verzahnung der Oberseiten (30) mit den Unterseiten (32) entsteht, und wobei die Zwischenlage (14) einen höheren Reibungskoeffizienten als die die Gebinde (20) zusammenfassende Schrumpffolie (24) aufweist.

2. Zwischenlage (14) nach Anspruch 1, **dadurch gekennzeichnet, dass** die Zwischenlage (14) eine Dichte zwischen 0,917 bis 0,975 g/cm³, eine Dicke zwischen 50 bis 200 µm und einen Reibungskoeffizient zwischen 0,25 und 0,6 und die Schrumpffolie (24) einen Reibungskoeffizient zwischen 0,2 und 0,35 aufweist.

3. Zwischenlage (14) nach einem der Ansprüche 1 bis 2, **dadurch gekennzeichnet, dass** die Zwischenlage (14) verstärkt ist.

4. Zwischenlage (14) nach einem der Ansprüche 1 bis 3, **dadurch gekennzeichnet, dass** die Zwischenlage (14) punktuell verstärkt ist.

5. Zwischenlage (14) nach Anspruch 4, **dadurch gekennzeichnet, dass** die Zwischenlage (14) punktuell durch gezieltes Schrumpfen verstärkt ist.

6. Zwischenlage (14) nach einem der vorhergehenden Ansprüche, **dadurch gekennzeichnet, dass** die Zwischenlage (14) durch Zusatz von Kreide verstärkt ist.

7. Zwischenlage (14) nach einem der Ansprüche 1 bis 6, **dadurch gekennzeichnet, dass** die Großgebinde-Palette (10) aus einem formschlüssigen Verbund aus mindestens zwei Gebindelagen (21) und der mindestens einen Zwischenlage (14) besteht.

8. Zwischenlage (14) nach einem der Ansprüche 1 bis 7, **dadurch gekennzeichnet, dass** die Großgebinde-Palette (10) mit einer Schrumpffolie zur Transportsicherung umhüllt ist.

9. Zwischenlage (14) nach Anspruch 8, **dadurch gekennzeichnet, dass** die Schrumpffolie zur Transportsicherung eine Schrumpfhaube ist.

10. Zwischenlage nach einem der vorhergehenden Ansprüche, **dadurch gekennzeichnet, dass** die die Gebinde (20) zusammenhaltende Schrumpffolie (24), die Zwischenlage (14) und die zur Transportsicherung der Großgebinde-Palette (10) dienende Schrumpffolie aus demselben Material besteht.

## Claims

1. Intermediate layer (14) in combination with a large package palette (10) comprising at least two package layers (21) stacked one upon the other, whereby the upper packages (20b) are arranged in an upper package layer (21) above the lower packages (20a) that are arranged in a lower package layer (21), and whereby at least one intermediate layer (14) is arranged between the at least two stacked package layers (21), **characterized in that** a package (20) comprises at least two liquid containers (22), each having a top (30) and a bottom (32), whereby the packages (20) are combined by means of a shrink film (24) and whereby the intermediate layer (14) is a PE-film, the PE- film being so adaptable and / or deformable, that the tops (30) of the liquid containers (22) of the lower packages (20a) engage into the bottoms (32) of the liquid containers (22) of the packages (20b) arranged above and that in connection with the intermediate layer (14) a toothing of the tops (30) with the bottoms (32) is formed and whereby the intermediate layer (14) has a higher friction coefficient than the shrink film (24) combining the packages (20).

2. Intermediate layer (14) according to claim 1, **characterized in that** the intermediate layer (14) has a density between 0,917 to 0,975 g/cm³, a thickness between 50 to 200 µm and a friction coefficient between 0,25 to 0,6 and that the shrink film (24) has a friction coefficient between 0,2 to 0,35.

3. Intermediate layer (14) according to one of the claims 1 to 2, **characterized in that** the intermediate layer (14) is reinforced.

4. Intermediate layer (14) according to one of the claims 1 to 3, **characterized in that** the intermediate layer (14) is reinforced in selective points.

5. Intermediate layer (14) according to claim 4, **characterized in that** the intermediate layer (14) is reinforced in selective points by selective shrinkage.

6. Intermediate layer (14) according to one of the previous claims, **characterized in that** the intermediate layer (14) is reinforced by the addition of chalk.

7. Intermediate layer (14) according to one of the claims 1 to 6, **characterized in that** the large package palette (10) is a form locking compound comprising at least two package layers (21) and comprising the at least one intermediate layer (14).

8. Intermediate layer (14) according to one of the claims 1 to 7, **characterized in that** the large package palette (10) is wrapped with a shrink film for transport protection.

9. Intermediate layer (14) according to claim 8, **characterized in that** the shrink film for transport protection is a shrink cover.

10. Intermediate layer (14) according to one of the previous claims, **characterized in that** the shrink film (24) combining the packages, the intermediate layer (14) and the shrink film used for transport protection of the large package palette (10) consist of the same material.

## Revendications

1. Intercalaire (14) en combinaison avec une palette à gros packs (10) qui comprend au moins deux couches de packs (21) superposées, des packs supérieurs (20b) dans une couche supérieure de packs (21) étant disposés sur des packs inférieurs (20a) dans une couche inférieure de packs (21), et au moins un intercalaire (14) étant disposé entre lesdites au moins deux couches de packs (21) superposées, **caractérisé par le fait qu'**un pack (20) comprend au moins deux récipients de liquide (22) avec une face supérieure (30) et une face inférieure (32) chacun, lesdits packs (20) étant regroupés au moyen d'un film rétractable (24) et ledit intercalaire (14) étant une feuille en PE qui peut être adaptée et/ou déformée de manière à ce que les faces supérieures (30) des récipients de liquide (22) des packs inférieurs (20a) s'engagent dans les faces inférieures (32) des récipients de liquide (22) des packs (20b) disposés là-dessus et qu'un engrenage des faces supérieures (30) avec les faces inférieures (32) soit créé en liaison avec ledit intercalaire (14), et ledit intercalaire (14) présentant un coefficient de friction supérieur à celui du film rétractable (24) regroupant les packs (20).

2. Intercalaire (14) selon la revendication 1, **caractérisé par le fait que** ledit intercalaire (14) présente une densité comprise entre 0,917 et 0,975 g/cm³, une épaisseur comprise entre 50 et 200 µm et un coefficient de friction compris entre 0,25 et 0,6 et que ledit film rétractable (24) présente un coefficient de friction compris entre 0,2 et 0,35.

3. Intercalaire (14) selon l'une quelconque des revendications 1 à 2, **caractérisé par le fait que** ledit intercalaire (14) est renforcé.

4. Intercalaire (14) selon l'une quelconque des revendications 1 à 3, **caractérisé par le fait que** ledit intercalaire (14) est renforcé ponctuellement.

5. Intercalaire (14) selon la revendication 4, **caractérisé par le fait que** ledit intercalaire (14) est renforcé ponctuellement par un retrait ciblé.

6. Intercalaire (14) selon l'une quelconque des revendications précédentes, **caractérisé par le fait que** ledit intercalaire (14) est renforcé en ajoutant de la craie.

7. Intercalaire (14) selon l'une quelconque des revendications 1 à 6, **caractérisé par le fait que** ladite palette à gros packs (10) est constituée par un assemblage à engagement positif d'au moins deux couches de packs (21) et dudit au moins un intercalaire (14).

8. Intercalaire (14) selon l'une quelconque des revendications 1 à 7, **caractérisé par le fait que** ladite palette à gros packs (10) est enveloppée d'un film rétractable pour la sécurité de transport.

9. Intercalaire (14) selon la revendication 8, **caractérisé par le fait que** ledit film rétractable pour la sécurité de transport est une housse rétractable.

10. Intercalaire selon l'une quelconque des revendications précédentes, **caractérisé par le fait que** ledit film rétractable (24) retenant ensemble les packs (20), ledit intercalaire (14) ainsi que ledit film rétractable servant à la sécurité de transport de la palette à gros packs (10) sont réalisés dans la même matière.
